# EUROPÄISCHE PATENTSCHRIFT

(11) **EP 2 718 599 B1**
(45) Veröffentlichungstag und Bekanntmachung des Hinweises auf die Patenterteilung: **10.07.2019**
(21) Anmeldenummer: 12723105.8
(22) Anmeldetag: 07.05.2012
(51) Int. Cl.: E03B 7/07, E03C 1/10, F24D 3/10

(54) **VORRICHTUNG ZUR HANDHABUNG EINES FLÜSSIGEN MEDIUMS**
DEVICE FOR HANDLING A LIQUID MEDIUM
DISPOSITIF POUR LA MANIPULATION D'UN MILIEU LIQUIDE

(30) Priorität: 09.06.2011 DE 102011106115
(43) Veröffentlichungstag der Anmeldung: 16.04.2014
(73) Patentinhaber: Honeywell Technologies Sarl, 1180 Rolle (CH)
(72) Erfinder: RAULE, Steffen, 69412 Eberbach (DE)
(74) Vertreter: Sturm, Christoph
(86) Internationale Anmeldenummer: PCT/EP2012/001949
(87) Internationale Veröffentlichungsnummer: WO 2012/167861

(56) Entgegenhaltungen:
- EP-A2- 1 855 061
- EP-A2- 1 950 354
- CH-A- 256 061
- DE-A1- 1 425 685
- DE-A1- 10 103 374
- DE-C- 960 942
- DE-U1- 29 606 442
- DE-U1-202005 015 270
- FR-A- 929 141
- US-A- 3 387 622
- US-A1- 2006 185 744

## Beschreibung

Die Erfindung betrifft eine Vorrichtung zur Handhabung eines flüssigen Mediums, insbesondere von Wasser, nach dem Oberbegriff des Anspruchs 1.

Die hier vorliegende Erfindung betrifft eine Vorrichtung zur Handhabung eines flüssigen Mediums, insbesondere zur Handhabung von Wasser. Solche Vorrichtungen werden auch als Armaturen bezeichnet.

Aus der Praxis ist eine Vielzahl unterschiedlicher Armaturen bekannt. So zum Beispiel Armaturen in Form von Druckreglern, in Form von Druckminderern, in Form von Rückflussverhinderern oder auch in Form von Systemtrennern. Ferner sind Armaturen in Form von Absperrventilen oder auch in Form von Füllaramaturen bekannt. Ferner ist es bekannt, mehrere solcher als getrennte Baugruppen ausgeführter Armaturen beim Aufbau eines Systems zur Handhabung eines flüssigen Mediums, so z. B. beim Aufbau eine Trinkwasserversorgungssystems oder eines Heizungssystems, miteinander durch Verschrauben zu kombinieren. Hierdurch entsteht dann nicht nur ein Abdichtbedarf an den gehäuseseitigen Schnittstellen der einzelnen Baugruppen, vielmehr entsteht hierdurch auch ein relativ großer Platzbedarf.

EP 1 950 354 A2 und US 2006/185744 A1 und EP 1 855 061 A2 offenbaren jeweils eine Vorrichtung mit einem Gehäuse, wobei in das Gehäuse einerseits ein Druckmindererventil und andererseits zwei Rückflussverhindererventile integriert sind.

DE960942 C und US 3387622A offenbaren Kombinationen aus Druckminder- und Sperrventile in einem Gehäuse.

Der Erfindung liegt die Aufgabe zu Grunde, eine neuartige Vorrichtung zur Handhabung eines flüssigen Mediums, insbesondere von Wasser zu schaffen. Diese Aufgabe wird durch eine Vorrichtung Wasser gemäß Anspruch 1 gelöst.

Die erfindungsgemäße Vorrichtung zur Handhabung von Wasser stellt eine hohe Funktionsintegration bereit. Dadurch können Schnittstellen zwischen bislang getrennten Armaturen und somit mögliche Dichtstellen zwischen denselben sowie mögliche Leckagen auf ein Minimum reduziert werden. Ferner kann der benötigte Platzbedarf reduziert werden. Ferner kann ein Druckverlust auf ein Minimum reduziert werden. Stromabwärts des Druckmindererventils erfolgt kein Druckverlust. Der Druckverlust der beiden in die Einlasskammer integrierten Rückflussverhindererventile ist auf Grund des Druckmindererventils, welches stromabwärts der beiden Rückflussverhindererventile angeordnet ist, vernachlässigbar gering.

Vorzugsweise sind in das Gehäuse weiterhin mehrere Prüfstutzen integriert, nämlich einer erster mit der Einlasskammer des Gehäuses in Verbindung stehender Prüfstutzen und ein zweiter mit der Auslasskammer des Gehäuses in Verbindung stehender Prüfstutzen. Durch Integration der Prüfstutzen in das Gehäuse ist eine weitere Funktionsintegration, eine weitere Reduzierung von Schnittstellen sowie eine weitere Reduzierung des Platzbedarfs möglich.

Der erste Prüfstutzen steht dabei mit der zwischen den beiden Rückflussverhindererventilen ausgebildeten Teilkammer der Einlasskammer in Verbindung.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: einen Querschnitt durch eine erfindungsgemäße Vorrichtung zur Handhabung eines flüssigen Mediums in einem ersten Zustand derselben; und
- Fig. 2: einen Querschnitt durch die erfindungsgemäße Vorrichtung zur Handhabung eines flüssigen Mediums in einem zweiten Zustand derselben.

Die hier vorliegende Erfindung betrifft eine Vorrichtung zur Handhabung eines flüssigen Mediums, insbesondere eine Armatur zur Handhabung von Wasser, wie zum Beispiel eine Armatur eines Trinkwasserversorgungssystems.

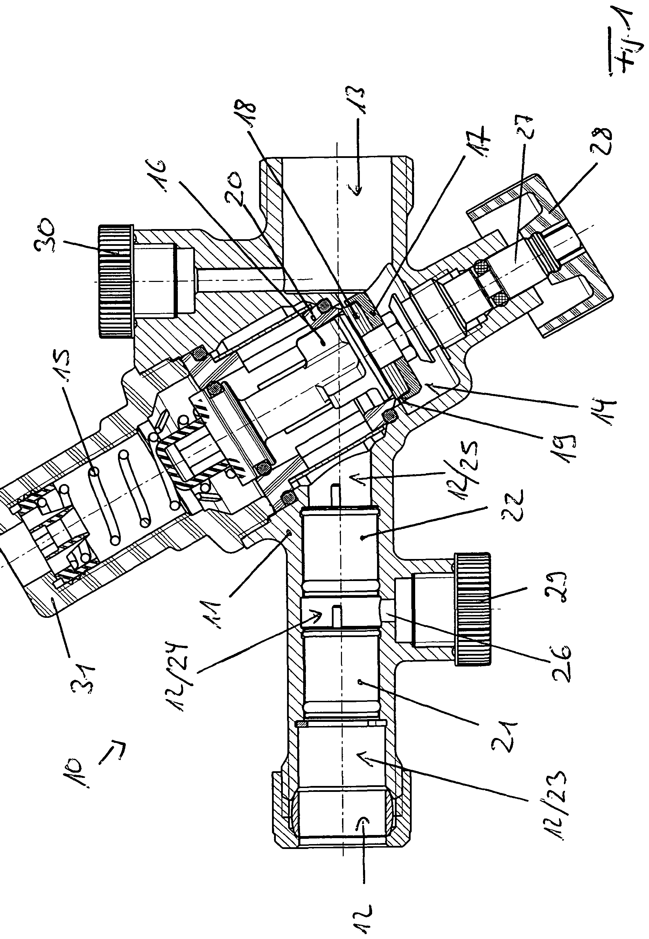

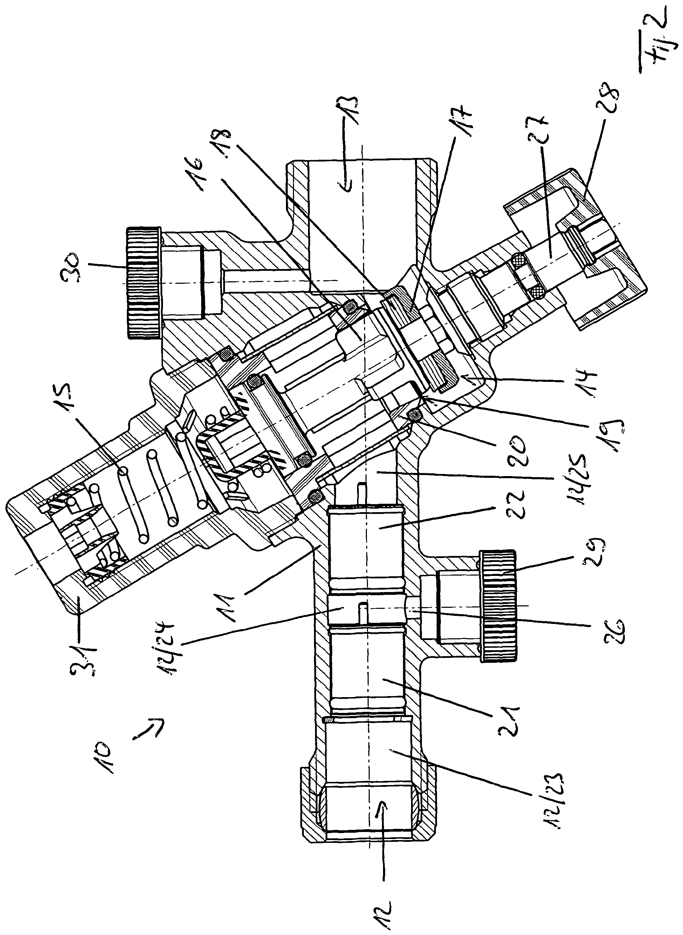

Fig. 1 und 2 zeigen einen Querschnitt durch ein bevorzugtes Ausführungsbeispiel einer erfindungsgemäßen Vorrichtung 10 zur Handhabung eines flüssigen Mediums, wobei die Vorrichtung 10 ein Gehäuse 11 umfasst, welches eine Einlasskammer 12 für das flüssige Medium und eine Auslasskammer 13 für dasselbe definiert.

In das Gehäuse 11 der erfindungsgemäßen Vorrichtung 10 ist ein Druckmindererventil 14 integriert, über welches die Einlasskammer 12 und die Auslasskammer 13 abhängig von dem in der Auslasskammer 13 herrschenden Auslasskammerdruck entweder miteinander gekoppelt oder voneinander getrennt sind, nämlich derart, dass dann, wenn der in der Auslasskammer 13 herrschende Auslasskammerdruck größer als ein Grenzwert ist, das Druckmindererventil zur Trennung von Einlasskammer 12 und Auslasskammer 13 automatisch geschlossen ist, wohingegen dann, wenn der in der Auslasskammer 13 herrschende Auslasskammerdruck kleiner als ein Grenzwert ist, das Druckmindererventil 14 zur Kopplung von Einlasskammer 12 und Auslasskammer 13 automatisch geöffnet ist.

Der Grenzwert für den Auslasskammerdruck, bei dessen Unterschreiten das Druckmindererventil 14 automatisch öffnet, wird durch ein Federelement 15 des Druckmindererventils 14 bestimmt, welches auf einen Kolben 16 des Druckmindererventils 14 in Öffnungsrichtung desselben einwirkt. Gegen diese vom Federelement 15 bereitgestellte Kraft wirkt eine Kraft, die von dem in der Auslasskammer 13 herrschenden Auslasskammerdruck abhängig ist, nämlich über einen Ventilteller 17 des Druckmindererventils 14, der in der Auslasskammer 13 positioniert ist.

Dieser Ventilteller 17 nimmt ein Dichtelement 18 auf, welches dann, wenn der in der Auslasskammer 13 herrschende Auslasskammerdruck größer als der vom Federelement 15 bestimmte Grenzwert ist, dass Dichtelement 18 des Druckmindererventils 14 gegen einen Ventilsitz 19 des Druckmindererventils 14 drückt (siehe Fig. 1), wohingegen dann, wenn der in der Auslasskammer 13 herrschende Auslasskammerdruck kleiner als der vom Federelement 15 vorgegebene Grenzwert ist, das Dichtelement 18 vom Ventilsitz 19 abgehoben ist (siehe Fig. 2). Diese grundsätzliche Funktion eines Druckmindererventils 14 ist dem hier angesprochenen Fachmann geläufig.

Der Ventilsitz 19 für das Dichtelement 18 des Druckmindererventils 14 ist von einem in das Gehäuse 11 eingesetzten Einsatz 20 bereitgestellt, wobei der Einsatz 20 über eine mit dem Gehäuse 11 verschraubte Federhaube 31 im Gehäuse 11 geklemmt ist. An Stelle eines solchen kolbengesteuerten Druckmindererventils 14 kann auch ein membrangesteuertes Druckmindererventil zum Einsatz kommen.

Erfindungsgemäß sind in die Einlasskammer 12 zwei Rückflussverhindererventile 21 und 22 integriert.

Die beiden Rückflussverhindererventile 21 und 22, die in die Einlasskammer 12 integriert sind, unterteilten die Einlasskammer 12 in drei Teilkammern 23, 24 und 25, nämlich in eine bezogen auf ein stromaufwärtiges Rückflussverhindererventil 21 stromaufwärtige Teilkammer 23, in eine bezogen auf ein stromabwärtiges Rückflussverhindererventil 22 stromabwärtige Teilkammer 25, und in einen zwischen dem stromaufwärtigen Rückflussverhindererventil 21 und dem stromabwärtigen Rückflussverhindererventil 22 positionierte mittlere Teilkammer 24.

Das Druckmindererventil 14 ist zwischen die stromabwärtige Teilkammer 25 der Einlasskammer 12 und die Auslasskammer 13 geschaltet.

Dann, wenn das Druckmindererventil 14 auf Grundlage des in der Auslasskammer 13 herrschenden Drucks automatisch geöffnet ist, sind auch die Rückflussverhindererventile 21 und 22 automatisch geöffnet, nämlich bei Mediumentnahme aus der Auslasskammer 13. Dann hingegen, wenn das Druckmindererventil 14 auf Basis des in der Auslasskammer 13 herrschenden Auslasskammerdrucks automatisch geschlossen ist, sind auch die Rückflussverhindererventile 21 und 22 automatisch geschlossen. Dadurch wird eine hohe Systemsicherheit für die erfindungsgemäße Armatur bereitgestellt.

Die beiden Rückflussverhindererventile 21 und 22 sind derart in die Einlasskammer 12 integriert, dass die zwischen den beiden Rückflussverhindererventilen 21, 22 ausgebildete Teilkammer 24 ein minimiertes Volumen aufweist. Durch die Minimierung des Volumens der zwischen den beiden Rückflussverhindererventilen 21, 22 ausgebildeten Teilkammer 24 kann ein Stagnationsvolumen minimiert werden.

Die beiden Rückflussverhindererventile 21 und 22 weisen vorzugsweise identischer Nennweiten auf. Durch die Verwendung identischer Nennweiten für die beiden Rückflussverhindererventile 21, 22 kann die Anzahl unterschiedlicher Bauteile reduziert werden.

In das Gehäuse 11 der Vorrichtung 10 ist weiterhin ein manuell betätigbares Absperrventil 27 integriert, welches von einer Verstellschraube 28 aus manuell betätigt werden kann. Dieses Absperrventil 27 wirkt derart mit dem Druckmindererventil 14 zusammen, dass das Absperrventil 27 in geschlossener Stellung das Druckmindererventil 14 permanent geschlossen hält, also auch dann, wenn der in der Auslasskammer 13 herrschende Druck unterhalb des vorgegebenen Grenzwerts absinkt. Dann hingegen, wenn das Absperrventil 27 geöffnet ist, lässt dasselbe das automatische Öffnen und Schließen des Druckmindererventils 14 abhängig von dem in der Auslasskammer 13 herrschenden Auslasskammerdruck zu.

Ferner sind in das Gehäuse 11 der erfindungsgemäßen Vorrichtung 10 mehrere Prüfstutzen integriert, nämlich ein erster mit der Einlasskammer 12 des Gehäuses 11 in Verbindung stehender Prüfstutzen 29 und ein zweiter, mit der Auslasskammer 13 des Gehäuses 11 in Verbindung stehender Prüfstutzen 30. Über die beiden Prüfstutzen 29 und 30 können jeweils Prüfeinrichtungen mit der erfindungsgemäßen Vorrichtung 10 gekoppelt werden, um zum Beispiel die Funktionalität des jeweiligen Rückflussverhindererventils 21 bzw. 22 durch einen Druckabgriff zu prüfen.

Gemäß Fig. 1 und 2 steht der erste Prüfstutzen 29 mit der zwischen den beiden Rückflussverhindererventilen 21, 22 ausgebildeten, mittleren Teilkammer 24 der Einlasskammer 12 des Gehäuses 11 in Verbindung, nämlich über eine Ausnehmung 26. Dies erlaubt einen zu Prüfzwecken besonders vorteilhaften Druckabgriff zwischen den beiden Rückflussverhindererventilen 21 und 22.

Die erfindungsgemäße Vorrichtung 10 zeichnet sich durch eine hohe Funktionsintegration aus. Hierdurch ist es möglich, beim Aufbau eines Systems zur Handhabung eines flüssigen Mediums, so zum Beispiel bei Aufbau eines Trinkwasserversorgungssystems, die Anzahl von Schnittstellen zwischen bislang getrennt ausgeführten Armaturen und damit mögliche Leckagen zwischen denselben zu verringern.

Ferner kann der Platzbedarf verringert werden, der zum Beispiel bei Aufbau eines Trinkwasserversorgungssystems von den einzelnen Baugruppen benötigt wird.

### Bezugszeichenliste

- 10: Vorrichtung
- 11: Gehäuse
- 12: Einlasskammer
- 13: Auslasskammer
- 14: Druckmindererventil
- 15: Federelement
- 16: Kolben
- 17: Ventilteller
- 18: Dichtelement
- 19: Ventilsitz
- 20: Einsatz
- 21: Rückflussverhindererventil
- 22: Rückflussverhindererventil
- 23: Teilkammer
- 24: Teilkammer
- 25: Teilkammer
- 26: Ausnehmung
- 27: Absperrventil
- 28: Betätigungsmittel
- 29: Prüfstutzen
- 30: Prüfstutzen
- 31: Federhaube

## Patentansprüche

1. Vorrichtung zur Handhabung eines flüssigen Mediums, insbesondere von Wasser, mit einem Gehäuse (11), wobei das Gehäuse (11) eine Einlasskammer (12) für das flüssige Medium und eine Auslasskammer (13) für das flüssige Medium definiert, die durch ein Druckmindererventil (14) derart voneinander getrennt bzw. miteinander gekoppelt sind, dass dann, wenn ein in der Auslasskammer (13) herrschender Auslasskammerdruck kleiner als ein Grenzwert ist, das Druckmindererventil (14) zur Kopplung von Einlasskammer (12) und Auslasskammer (13) automatisch geöffnet ist, und dass dann, wenn der in der Auslasskammer (13) herrschende Auslasskammerdruck größer als der Grenzwert ist, das Druckmindererventil (14) zur Trennung von Einlasskammer (12) und Auslasskammer (13) automatisch geschlossen ist, wobei das Druckmindererventil (14), welches die Einlasskammer (12) und die Auslasskammer (13) abhängig von dem in der Auslasskammer (13) herrschenden Auslasskammerdruck entweder automatisch koppelt oder trennt, in das Gehäuse (11) integriert ist, und wobei in der Einlasskammer (12) des Gehäuses (11) zwei Rückflussverhindererventile (21, 22) integriert sind, **dadurch gekennzeichnet, dass** in das Gehäuse (11) weiterhin ein manuell betätigbares Absperrventil (27) integriert ist, welches in geschlossener Stellung das Druckmindererventil (14) permanent geschlossen hält, und welches in geöffneter Stellung das automatische Öffnen und Schließen des Druckmindererventils (14) abhängig vom in der Auslasskammer (13) herrschende Auslasskammerdruck zulässt.

2. Vorrichtung nach Anspruch 1, **dadurch gekennzeichnet, dass** die Rückflussverhindererventile (21, 22) dann, wenn das Druckmindererventil (14) geöffnet ist, bei Mediumentnahme aus der Auslasskammer (13) automatisch geöffnet sind, und dass die Rückflussverhindererventile (21, 22) dann, wenn das Druckmindererventil (14) geschlossen ist, automatisch geschlossen sind.

3. Vorrichtung nach Anspruch 1 oder 2, **dadurch gekennzeichnet, dass** in das Gehäuses (11) weiterhin mehrere Prüfstutzen integriert sind, nämlich einer erster mit der Einlasskammer (12) des Gehäuses (11) in Verbindung stehender Prüfstutzen (29) und ein zweiter mit der Auslasskammer (13) des Gehäuses (11) in Verbindung stehender Prüfstutzen (30).

4. Vorrichtung nach Anspruch 3, **dadurch gekennzeichnet, dass** der erste Prüfstutzen (29) mit einer zwischen den beiden Rückflussverhindererventilen (21, 22) ausgebildeten Teilkammer (24) der Einlasskammer (12) des Gehäuses (11) in Verbindung steht.

5. Vorrichtung nach Anspruch 3 oder 4, **dadurch gekennzeichnet, dass** jeder der Prüfstutzen (29, 30) der Aufnahme einer Prüfeinrichtung dient.

6. Vorrichtung nach einem der Ansprüche 1 bis 5, **dadurch gekennzeichnet, dass** die beiden in die Einlasskammer (12) des Gehäuses (11) integrierten Rückflussverhindererventile (21, 22) die Einlasskammer (12) in drei Teilkammern (23, 24, 25) untergliedern, wobei eine zwischen den beiden Rückflussverhindererventilen (21, 22) ausgebildete Teilkammer (24) ein minimiertes Volumen aufweist.

7. Vorrichtung nach einem der Ansprüche 1 bis 6, **dadurch gekennzeichnet, dass** die beiden in die Einlasskammer (12) des Gehäuses (11) integrierten Rückflussverhindererventile (21, 22) identische Nennweiten aufweisen.

## Claims

1. Device for handling a liquid medium, in particular water, having a housing (11), wherein the housing (11) defines an inlet chamber (12) for the liquid medium and an outlet chamber (13) for the liquid medium, said chambers being separated from one another or coupled to one another by a pressure-reducing valve (14) such that when an outlet chamber pressure prevailing in the outlet chamber (13) is lower than a limit value, the pressure-reducing valve (14) is automatically opened in order to couple the inlet chamber (12) and the outlet chamber (13), and such that when the outlet chamber pressure prevailing in the outlet chamber (13) is higher than the limit value, the pressure-reducing valve (14) is automatically closed in order to separate the inlet chamber (12) and the outlet chamber (13), wherein the pressure-reducing valve (14), which either couples or separates the inlet chamber (12) and the outlet chamber (13) depending on the outlet chamber pressure prevailing in the outlet chamber (13), is integrated into the housing (11), and wherein two backflow prevention valves (21, 22) are integrated into the inlet chamber (12) of the housing (11), **characterized in that** a manually actuable shut-off valve (27) is furthermore integrated into the housing (11), said shut-off valve (27) keeping the pressure-reducing valve (14) permanently closed in the closed position, and allowing the automatic opening and closing of the pressure-reducing valve (14), depending on the outlet chamber pressure prevailing in the outlet chamber (13), in the open position.

2. Device according to Claim 1, **characterized in that** when the pressure-reducing valve (14) is opened, the backflow prevention valves (21, 22) are automatically opened in the case of medium removal from the outlet chamber (13), and **in that** when the pressure-reducing valve (14) is closed, the backflow prevention valves (21, 22) are automatically closed.

3. Device according to Claim 1 or 2, **characterized in that** a plurality of test connection pieces are furthermore integrated into the housing (11), specifically a first test connection piece (29) connected to the inlet chamber (12) of the housing (11) and a second test connection piece (30) connected to the outlet chamber (13) of the housing (11).

4. Device according to Claim 3, **characterized in that** the first test connection piece (29) is connected to a subchamber (24) of the inlet chamber (12) of the housing (11), said subchamber being formed between the two backflow prevention valves (21, 22).

5. Device according to Claim 3 or 4, **characterized in that** each of the test connection pieces (29, 30) serves to receive a test device.

6. Device according to one of Claims 1 to 5, **characterized in that** the two backflow prevention valves (21, 22) integrated into the inlet chamber (12) of the housing (11) subdivide the inlet chamber (12) into three subchambers (23, 24, 25), wherein a subchamber (24) formed between the two backflow prevention valves (21, 22) has a minimized volume.

7. Device according to one of Claims 1 to 6, **characterized in that** the two backflow prevention valves (21, 22) integrated into the inlet chamber (12) of the housing (11) have identical nominal widths.

## Revendications

1. Dispositif pour la manipulation d'un milieu liquide, en particulier d'eau, avec un corps (11), dans lequel le corps (11) définit une chambre d'entrée (12) pour le milieu liquide et une chambre de sortie (13) pour le milieu liquide, qui sont séparées l'une de l'autre ou qui sont couplées l'une à l'autre au moyen d'une soupape de réduction de pression (14), de telle manière que lorsqu'une pression de chambre de sortie régnant dans la chambre de sortie (13) est inférieure à une valeur limite, la soupape de réduction de pression (14) soit automatiquement ouverte pour le couplage de la chambre d'entrée (12) et de la chambre de sortie (13), et que lorsque la pression de chambre de sortie régnant dans la chambre de sortie (13) est supérieure à une valeur limite, la soupape de réduction de pression (14) soit automatiquement fermée pour la séparation de la chambre d'entrée (12) et de la chambre de sortie (13), dans lequel la soupape de réduction de pression (14), qui couple ou sépare automatiquement la chambre d'entrée (12) et la chambre de sortie (13) en fonction de la pression de chambre de sortie régnant dans la chambre de sortie (13), est intégrée dans le corps (11), et dans lequel deux soupapes anti-retour (21, 22) sont intégrées dans la chambre d'entrée (12) du corps (11), **caractérisé en ce qu'**une soupape d'arrêt (27) pouvant être actionnée manuellement est en outre intégrée dans le corps (11), laquelle en position fermée maintient la soupape de réduction de pression (14) fermée en permanence et laquelle en position ouverte permet l'ouverture et la fermeture automatiques de la soupape de réduction de pression (14) en fonction de la pression de chambre de sortie régnant dans la chambre de sortie (13).

2. Dispositif selon la revendication 1, **caractérisé en ce que** les soupapes anti-retour (21, 22) sont ouvertes automatiquement lors d'un prélèvement de milieu hors de la chambre de sortie (13) lorsque la soupape de réduction de pression (14) est ouverte, et **en ce que** les soupapes anti-retour (21, 22) sont fermées automatiquement lorsque la soupape de réduction de pression (14) est fermée.

3. Dispositif selon la revendication 1 ou 2, **caractérisé en ce que** plusieurs tubulures de contrôle sont en outre intégrées dans le corps (11), à savoir une première tubulure de contrôle (29) se trouvant en communication avec la chambre d'entrée (12) du corps (11) et une seconde tubulure de contrôle (30) se trouvant en communication avec la chambre de sortie (13) du corps (11).

4. Dispositif selon la revendication 3, **caractérisé en ce que** la première tubulure de contrôle (29) est en communication avec une chambre partielle (24) de la chambre d'entrée (12) du corps (11) formée entre les deux soupapes anti-retour (21, 22).

5. Dispositif selon la revendication 3 ou 4, **caractérisé en ce que** chacune des tubulures de contrôle (29, 30) sert de logement pour un dispositif de contrôle.

6. Dispositif selon l'une quelconque des revendications 1 à 5, **caractérisé en ce que** les deux soupapes anti-retour (21, 22) intégrées dans la chambre d'entrée (12) du corps (11) subdivisent la chambre d'entrée (12) en trois chambres partielles (23, 24, 25), dans lequel une chambre partielle (24) formée entre les deux soupapes anti-retour (21, 22) présente un volume minimisé.

7. Dispositif selon l'une quelconque des revendications 1 à 6, **caractérisé en ce que** les deux soupapes anti-retour (21, 22) intégrées dans la chambre d'entrée (12) du corps (11) présentent des largeurs nominales identiques.
